# EUROPEAN PATENT APPLICATION

(11) **EP 4 631 682 A1**
(43) Date of publication of application: **15.10.2025**
(21) Application number: 23900783.4
(22) Date of filing: 07.04.2023
(51) Int. Cl.: B25J 15/06, B25J 19/00

(54) **VERTICAL VACUUM GRIPPER DEVICE**

(30) Priority: 08.12.2022 KR 20220170704
(71) Applicant: VTEC Co., Ltd., Busan 46972 (KR)
(72) Inventor: CHO, Ho-Young, Seoul 08007 (KR)
(74) Representative: Cabinet Chaillot
(86) International application number: PCT/KR2023/004739
(87) International publication number: WO 2024/122758

(57) **Abstract**

The present invention relates to a vertical type vacuum gripper device. The vertical type vacuum gripper device includes a cylindrical body provided with a built-in air ejector mounted in a longitudinal direction, a connector coupled to a lower end of the body, and an adsorption pad connected to the connector. Particularly, the body includes an upper cover in which a plurality of air supply ports are provided, a breaking tube which is provided as a tube parallel to the ejector on a lower bottom surface and in which the inside of the tube communicates with an inner space of the adsorption pad, an air outlet provided in a lower portion of a side surface, and a passage provided in the bottom surface to allow the upper body and the inner space of the lower adsorption pad to communicate with each other. Thus, a vacuum passing extending from a first supply port → the ejector → the outlet and a breaking passage extending from a second supply port → the breaking tube → the inner space of the pad are defined.

## Description

### TECHNICAL FIELD

The present invention relates to a vacuum gripper device, and more particularly, to a device used to adsorb and grip an object by operating with high-speed compressed air in a vacuum transfer system.

### BACKGROUND ART

Typically, a vacuum gripper device includes a hollow body, an adsorption pad connected to a suction port at one side of the body, and a vacuum ejector mounted inside the body. In a state in which the pad is in contact with a surface of an object, when compressed air passes through the ejector at a high speed, air inside the pad is induced into the ejector and then discharged to the outside together with the compressed air, and in this process, a vacuum and negative pressure are generated inside the pad.

The object may be adsorbed to the pad by the negative pressure generated as described above and transferred to a fixed position by an automated or robotic system.

For example, a 'vacuum gripper device' is disclosed in Korea Patent Publication No. 10-2009-0131617. As can be seen from this disclosure, the vacuum gripper device is provided in a box shape in a transverse direction, i.e., a 'horizontal' type relative to the internal ejector, and a pad is usually connected directly downward to a side port of the box. This type of 'horizontal' device is not economical as it occupies a wide space when installed, and has a limitation as it is difficult to be used in a plurality of dense manifold formats.

As another example, an 'in-line vacuum pump' is disclosed in Korea Patent Publication No. 10-1157542 (US Patent No. 9,151,300). The in-line vacuum pump disclosed herein is provided in a cylindrical shape having a longitudinal direction, i.e., a 'vertical type' relative to an internal ejector, and a pad is connected directly downward to an end of the cylinder.

The disclosed 'vertical type' device has advantages in its installation and application compared to the 'horizontal type' device described above. However, there are problems:
in which a design for generating vacuum in the pad and breaking the vacuum as necessary is complex, and an operation is cumbersome; and
it is very difficult to install and operate an air valve, i.e., a check valve inside the device.

On the one hand,
there is also the problem: that it is difficult to allow the number of ejectors used in the device to vary, and thus,
it is difficult to respond to grip characteristics required in actual fields.

### <Prior Art Documents>

Korean Patent Publication No. 10-2009-0131617
Korean Patent Registration No. 10-1157542
Korean Patent Registration No. 10-1659517
Korean Patent Registration No. 10-1019948

### DISCLOSURE OF THE INVENTION

### TECHNICAL PROBLEM

The present invention relates to a 'vertical type' vacuum gripper device, and is proposed to solve the problems of the above-mentioned conventional vertical type vacuum gripper device.

An object of the present invention is to provide a vertical type vacuum gripper device that is capable of being easily manufactured and operated by simplifying a design for generating and breaking vacuum. Another object of the present invention is to provide a vertical type vacuum gripper device in which installation and operations of valves are effective by optimally disposing each valve inside the device. Further another object of the present invention is to provide a vertical type vacuum gripper device that is capable of flexibly responding to grip characteristics of the device required in the field by allowing the number of ejectors applied to the device to vary.

### TECHNICAL SOLUTION

A vertical type vacuum gripper device of the present invention includes:
a cylindrical body provided with a built-in air ejector mounted in a longitudinal direction, a connector coupled to a lower end of the body, and an adsorption pad connected to the connector,
wherein the body includes:
   an upper cover in which a plurality of air supply ports are provided;
   a breaking tube which is provided as a tube parallel to the ejector on a lower bottom surface and in which the inside of the tube communicates with an inner space of the adsorption pad;
   an air outlet provided in a lower portion of a side surface; and
   a passage provided in the bottom surface to allow the upper body and the inner space of the lower adsorption pad to communicate with each other, and
   the body is provided with a vacuum passage extending from a first supply port to the outlet via the ejector, and a breaking passage extending from a second supply port to the inner space of the adsorption pad via the breaking tube.

Preferably, the body may include:
a plurality of ejector mounts disposed around the breaking tube,
wherein, since each ejector is provided detachably on each mount,
the number of ejectors applied in the body appropriately varies.

Preferably, the connector may be provided as
a ring-shaped member having a first hole and a second hole, which are defined to allow the inner space of the pad to communicate with the breaking tube and the passage, respectively, and is installed to be spaced a predetermined interval from the bottom surface, and
a check valve configured to allow an air flow only in a direction toward the passage from the inner space of the adsorption pad may be provided in the second hole, wherein the check valve may be openable while moving vertically within a range of the interval.

A check valve configured allow an air flow only in a direction toward the inner space of the adsorption pad from the breaking tube may be provided in the first hole, wherein the check valve may be openable while moving vertically by a pressure of compressed air.

The body may include:
a pressure tube disposed parallel to the ejector and the breaking tube and passing through the bottom surface to communicate with the inner space of the adsorption pad; and
a sensor connection port extending from the pressure tube to one side of the cover to directly measure a pressure of the inner space of the pad.

### ADVANTAGEOUS EFFECTS

According to the vacuum gripper device of the present invention, all the main elements of the device, such as the ejector, the breaking tube, and the pressure tube, may be disposed vertically parallel within the body and be designed to extend through the cover at the upper end of the body. Therefore, there may be the effect of simplifying the manufacture and operation of the entire device. In addition, there may be the effect that allows the check valve to be easily disposed at the appropriate position by using the connector structure. The air ejector may be detachably installed on the mount, and thus, there may be the effect in which the number of ejectors appropriately vary depending on the on-site situation.

### BRIEF DESCRIPTION OF THE DRAWINGS

FIG. 1 is a perspective view of a vacuum gripper device according to the present invention.
FIG. 2 is an exploded view of FIG. 1.
FIG. 3 is a plan view of FIG. 1.
FIG. 4 is a cross-sectional view taken along line 'A-A' of FIG. 3.
FIG. 5 is a cross-sectional view taken along line 'B-B' of FIG. 3.
FIG. 6 is a view illustrating a 'vacuum' operation using FIG. 4.
FIG. 7 is a view illustrating a 'breaking' operation using FIG. 5.

### [Description of the Symbols]

| | | | |
|---|---|---|---|
| 10. | Vacuum gripper device | | |
| 11. | Ejector | 11a. | Through-hole |
| 12. | Body | 13. | Connector |
| 14. | Pad | | |
| 15a. | First supply port | 15b. | Second supply port |
| 16. | Cover | 17. | Bottom surface |
| 18. | Breaking tube | 19. | Outlet |
| 20. | Passage | | |
| 21. | Vacuum passage | 22. | Breaking passage |
| 23. | First hole | 24. | Second hole |
| 25, 26. | Check valve | | |
| 27. | Mount | 28. | Pressure tube |
| 29. | Connection port | | |
| 30. | Silencer | 31. | Acoustic absorbent |
| 32. | Discharge hole | 33. | Filter |
| d. | Interval | | |
| W. | Object | | |

### BEST MODE FOR CARRYING OUT THE INVENTION

The features and operational effects of the 'vertical type vacuum gripper device' (hereinafter, referred to as a 'vacuum gripper device') of the present invention, which are described or not described above, will become more apparent through the description of preferred embodiments of the present invention described below with reference to the attached drawings. In the overall drawing, the vacuum gripper device of the present invention is indicated by reference numeral 10.

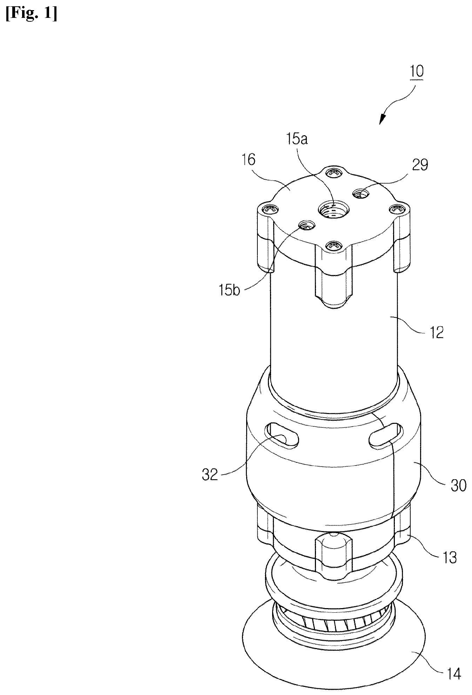

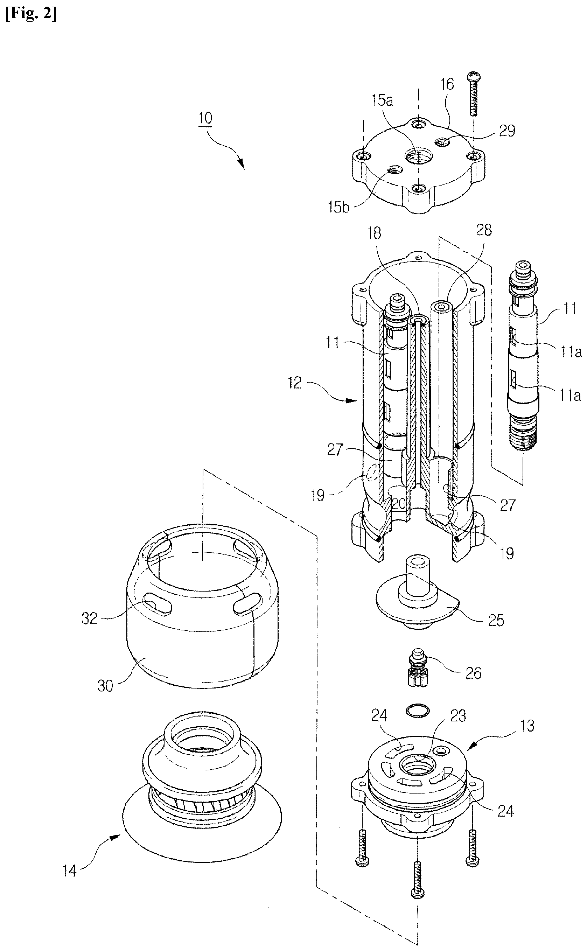

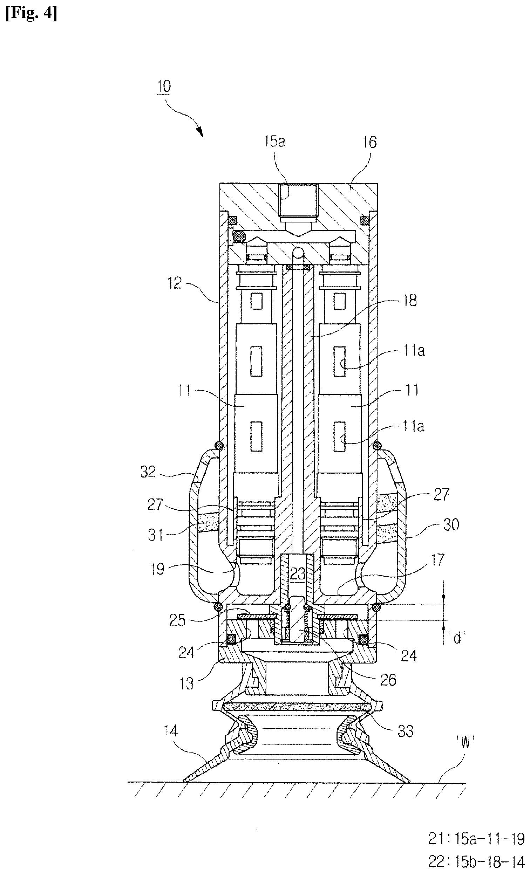

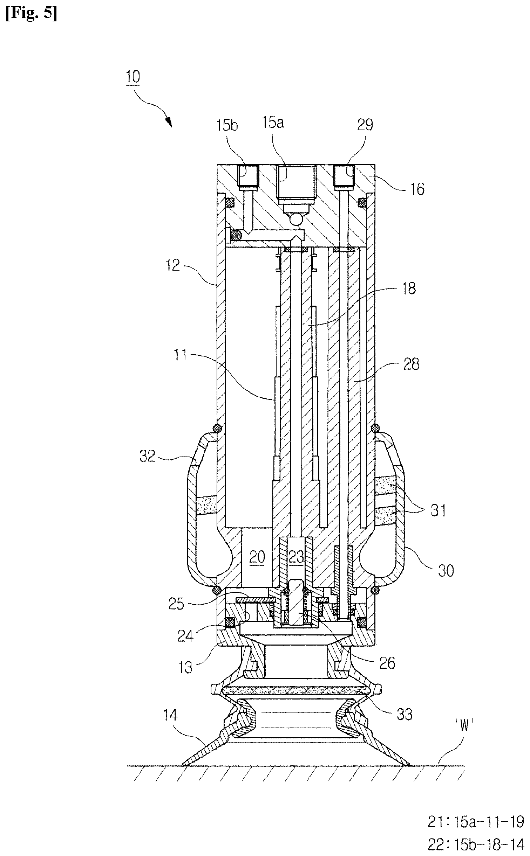

Referring to FIGS. 1 to 5, a vacuum gripper device 10 of the present invention include a cylindrical body 12 provided with a built-in air ejector 11 mounted in a longitudinal direction, a connector 13 coupled to a lower end of the body 12, and an adsorption pad 14 connected to the connector 13. Here, the ejector 11 is a typical air ejector having a through-hole 11a defined in a sidewall thereof. In the drawing, the pad 14 may be directly connected to the connector 13, but may also be disposed at a long distance from the connector 13 using a hose or the like.

Specifically, the body 12 includes:
an upper cover 16 in which a plurality of air supply ports 15a and 15b are provided;
a breaking tube 18 which is provided as a tube parallel to the ejector 11 on a lower bottom surface 17 and in which the inside of the tube communicates with an inner space of the pad 14;
an air outlet 18 provided in a lower portion of a side surface; and
a passage 20 provided in the bottom surface 17 to allow the upper body 12 and the inner space of the lower pad 14 to communicate with each other.

Thus, a vacuum passage 21 extending from a first supply port 15a of the cover 16 to the outlet 19 via the ejector 11, and a breaking passage 22 extending from a second supply port 15b of the cover 16 to the inner space of the pad 14 via the breaking tube 18 are provided.

The connector 13 is a ring-shaped member having a first hole 23 and a second hole 24, which are defined to allow the inner space of the pad 14 to communicate with the breaking tube 18 and the passage 20, respectively, and is installed below the bottom surface 17 at a predetermined interval d. In addition, a check valve 25 that allows an air flow only in a direction toward the passage 20 from the inner space of the pad 14 may be provided in the second hole 24, and the check valve 25 may be openable while moving vertically within a range of the interval d.

Here, the check valve 25 of the second hole 24 is a flexible rubber plate.

A check valve 26 that allows an air flow only in a direction toward the inner space of the pad 14 from the breaking tube 18 is provided in the first hole 23, and the check valve 26 is openable while moving vertically by a pressure of compressed air. Here, the check valve 26 of the first hole 23 is a valve supported by spring elasticity.

In this embodiment, the body 12 includes a plurality of ejector mounts 27 disposed around the breaking tube 18. In addition, since each ejector 11 is provided detachably on each mount 27, the number of ejectors 11 applied in the vacuum gripper device 10 may appropriately vary. For example, if an object W is large and heavy, the number of ejectors 11 may increase, and conversely, if the object is relatively light, the number of ejectors 11 may decrease.

The body 12 further includes:
a pressure tube 28 disposed parallel to the ejector 11 and the breaking tube 18 and passing through the bottom surface 17 to communicate with the inner space of the pad 14; and
a sensor connection port 29 extending from the pressure tube 28 to one side of the cover 16 to directly measure a pressure (-kPa) of the inner space of the pad 14.

A sensor of the connection port 29 may determine whether the inner space of the pad 14 in a vacuum transfer system has reached an appropriate vacuum and negative pressure at which the object W is gripped and thus may provide useful information for determining whether to supply the compressed air.

A reference numeral 30 is a so-called 'silencer', which is mounted on an outer wall of the body 12 while wrapping around the air outlet 19, and also, a spiral acoustic absorbent 31 is disposed inside the silencer 130, and a discharge hole 32 is defined in an end of the silencer 130 to communicate with the spiral path. A structure of the silencer 30 may have an effect of allowing the outlet 19 to extend as long as possible and may effectively absorb and remove noise generated when air is discharged while minimizing exhaust resistance.

In this embodiment, the silencer 30 may be rotatably mounted to allow the air discharge direction to be arbitrarily adjusted. For convenience of the mounting, the silencer 30 is provided into two parts and then assembled at left and right sides of the body 12.

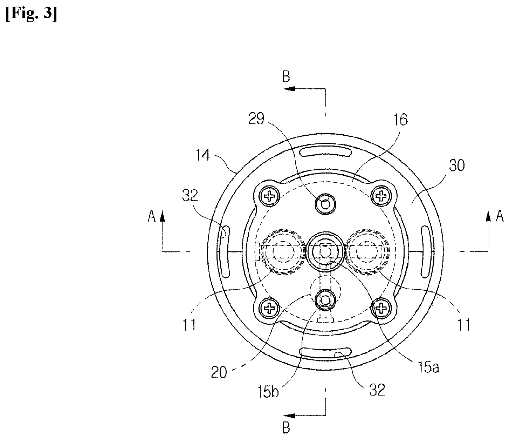

In the above, the first supply port 15a, the second supply port 15b, and the sensor connection port 29 are disposed adjacent to each other on the cover 16 of the body 12 (see FIG. 3), and vacuum is generated or broken inside the adsorption pad 14 by supplying the compressed air to the first supply port 15a or the second supply port 15b.

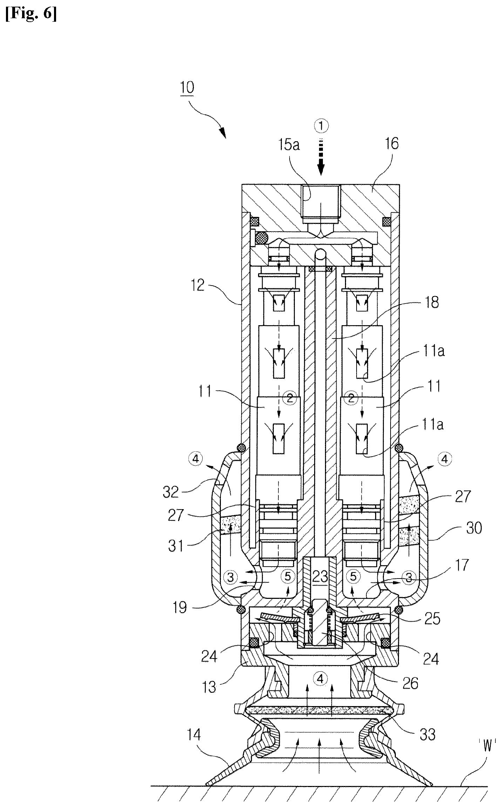

Referring to FIG. 6, first, when the pad 14 is in contact with a surface of the work object W, the compressed air is supplied to the first supply port 15a (see an arrow ①), and the supplied compressed air passes through the first supply port 15a → the ejector 11 → the vacuum passage 21 extending to the outlet 19 at a high speed and then is discharged to the outside (see arrows ②, ③, and ④).

In this process, a pressure drop occurs in a portion of the through-hole 11a of the sidewall of the ejector 11, and the internal air of the pad 14 sequentially passes through the second hole 24 of the connector 13 and the passage 20 of the bottom surface 17 to move into the body 12 and then is induced into the ejector 11 and is discharged to the outside together with the compressed air (see arrows ④ and ⑤). In this manner, as the inner space of the pad 14 is exhausted, the vacuum and negative pressure may be generated in the inner space of the pad 14, and the object W may be absorbed to the pad 14 and then be broken due to the generated negative pressure.

In this exhaust process, impurities on the surface of the object W may interfere with a suction passage extending from the inner space of the pad 14 to the second hole 24 → the passage 20 → the ejector 11 → the outlet 19 to interrupt the exhaust. Thus, in this embodiment, an air filter 33 is disposed at an optimal position. In the drawing, the filter 33 may be disposed inside the pad 14, but may be disposed inside the connector 13 or between the pad 14 and the connector 13.

For example, when the vacuum pressure of the pad 14 reaches an appropriate level, the supply of the compressed air may be stopped by a sensor signal from the connection port 29. Here, the check valve 25 may move downward to block the second hole 24 of the connector 13.

When the object W is adsorbed onto the pad 14 at an appropriate vacuum pressure level, the object may be transferred to a predetermined point by an automated or robotic system connected to the body 12. In addition, when the transfer of the object is completed, the pad 14 and the object W may be separated from each other, and the pad 14 may be prepared for subsequent works. However, for productivity of the work, the pad 14 needs to be quickly separated from the object W.

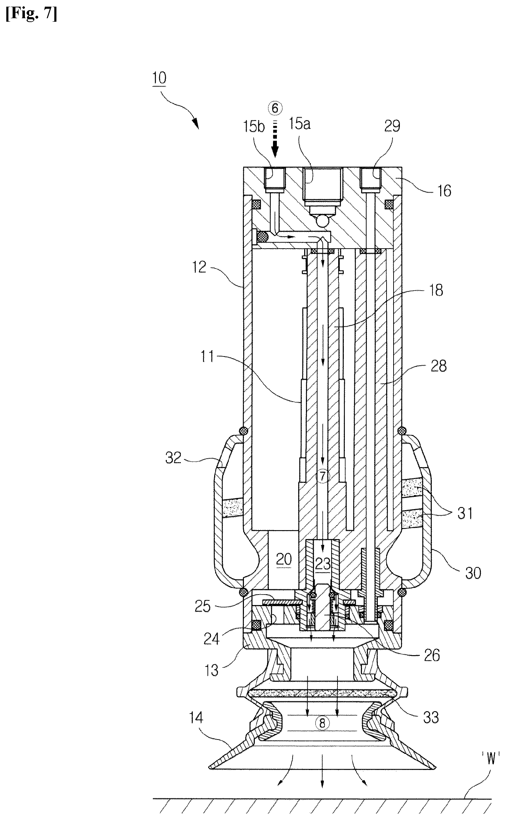

Referring to FIG. 7, when the transfer of the object W is completed, the compressed air is supplied to another supply port, i.e., the second supply port 15b (see an arrow ⑥), and the supplied compressed air flows sequentially through the second supply port 15b → the breaking tube 18 → the breaking passage 22 extending to the inner space of the pad 14 (see arrows ⑦ and ⑧). In this process, impurities attached to the bottom surface of the filter 33 are removed by a direct downward pressure of the supplied compressed air.

Briefly, the compressed air supplied to the second supply port 15b may be directly supplied to the inner space of the pad 14 through the breaking passage 22, and thus, the vacuum and negative pressure generated in the inner space of the pad 14 may be instantly broken. As a result, the pad 14 may be quickly separated from the object W. When the pad 14 is separated as described above, the supply of the compressed air may be stopped. Here, the check valve 26 may move upward due to the spring elasticity to block the first hole 23 of the connector 13.

As can be seen from the above description, the vacuum gripper device 10 of the present invention is designed so that:
all the main components of the device 10 such as the ejector 11, the breaking tube 18, and the pressure tube 28, are disposed parallel to each other in the longitudinal direction within the body 12 and extend through the cover 16 disposed at the upper end of the body 12;
the valves 25 and 26 are disposed at the appropriate positions using the structure of the connector 13; and
the ejector 11 is detachably installed on the mount 27 so that the number of ejectors appropriately varies depending on the on-site situation.

## Claims

1. A vertical type vacuum gripper device, which comprises a cylindrical body (12) provided with a built-in air ejector (11) mounted in a longitudinal direction, a connector (13) coupled to a lower end of the body (12), and an adsorption pad (14) connected to the connector (13),
wherein the body (12) comprises an upper cover (16) in which a plurality of air supply ports (15a, 15b) are provided, a breaking tube (18) which is provided as a tube parallel to the ejector (11) on a lower bottom surface (17) and in which the inside of the tube communicates with an inner space of the adsorption pad (14), an air outlet (19) provided in a lower portion of a side surface, and a passage (20) provided in the bottom surface (17) to allow the upper body (12) and the inner space of the lower adsorption pad (14) to communicate with each other,
the body (12) is provided with a vacuum passage (21) extending from a first supply port (15a) to the outlet (19) via the ejector (11), and a breaking passage (22) extending from a second supply port (15b) to the inner space of the adsorption pad (14) via the breaking tube (18), and
the body (12) comprises a plurality of ejector mounts (27) disposed around the breaking tube (18), wherein, since each ejector (11) is provided detachably on each mount (27), the number of ejectors (11) applied in the body (12) appropriately varies.

2. The vertical type vacuum gripper device of claim 1, wherein the connector (13) is provided as a ring-shaped member having a first hole (23) and a second hole (24), which are defined to allow the inner space of the adsorption pad (14) to communicate with the breaking tube (18) and the passage (20), respectively, and is installed to be spaced a predetermined interval (d) from the bottom surface (17), and
a check valve (25) configured to allow an air flow only in a direction toward the passage (20) from the inner space of the adsorption pad (14) is provided in the second hole (24), wherein the check valve (25) is openable while moving vertically within a range of the interval (d).

3. The vertical type vacuum gripper device of claim 2, wherein a check valve (26) configured allow an air flow only in a direction toward the inner space of the adsorption pad (14) from the breaking tube (18) is provided in the first hole (23), wherein the check valve (26) is openable while moving vertically by a pressure of compressed air.

4. The vertical type vacuum gripper device of claim 1, wherein the body (12) comprises a plurality of ejector mounts (27) disposed around the breaking tube (18).

5. The vertical type vacuum gripper device of claim 1, wherein the body (12) comprises:
a pressure tube (28) disposed parallel to the ejector (11) and the breaking tube (18) and passing through the bottom surface (17) to communicate with the inner space of the adsorption pad (14); and
a sensor connection port (29) extending from the pressure tube (28) to one side of the cover (16) to directly measure a pressure (-kPa) of the inner space of the adsorption pad (14).

6. The vertical type vacuum gripper device of claim 1, further comprising a silencer (30) mounted on an outer wall of the body (12) while wrapping around the outlet (19),
wherein, in the silencer (30), a spiral acoustic absorbent (31) is disposed inside the silencer (130), and a discharge hole (32) is defined in an end of the silencer (130) to communicate with a spiral path.

7. The vertical type vacuum gripper device of claim 6, wherein the silencer (30) is rotatably mounted to allow a direction of the discharge hole to be arbitrarily adjusted.

8. The vertical type vacuum gripper device of claim 6, wherein the silencer (30) is provided into two parts and assembled at left and right sides of the body (12).

9. The vertical type vacuum gripper device of claim 1, wherein an air filter (33) is disposed inside the adsorption pad (14), inside the connector (13), or between the adsorption pad (14) and the connector (13).
